(19) Europäisches Patentamt
European Patent Office
Office européen des brevets

(11) **EP 3 119 094 A1**

(12) **EUROPEAN PATENT APPLICATION**

(43) Date of publication:
**18.01.2017 Bulletin 2017/03**

(51) Int Cl.:
*H04N 21/25* (2011.01)  *G06N 99/00* (2010.01)
*H04N 21/466* (2011.01)

(21) Application number: **15306168.4**

(22) Date of filing: **17.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicants:
• **Thomson Licensing**
  **92130 Issy-les-Moulineaux (FR)**
• **Université Claude Bernard Lyon 1**
  **69100 Villeurbanne (FR)**
• **Université Lumière Lyon 2**
  **69500 Bron (FR)**

• **CNRS**
  **Centre National de la Recherche Scientifique**
  **75794 Paris Cedex 16 (FR)**

(72) Inventors:
• **LUMBRERAS, Alberto**
  **35576 Cesson-Sévigné (FR)**
• **GUEGAN, Marie**
  **35576 Cesson-Sévigné (FR)**
• **VELCIN, Julien**
  **69500 Bron (FR)**
• **JOUVE, Bertrand**
  **75794 Paris Cedex 16 (FR)**

(74) Representative: **Huchet, Anne**
  **TECHNICOLOR**
  **1-5, rue Jeanne d'Arc**
  **92130 Issy-les-Moulineaux (FR)**

(54) **METHODS AND SYSTEMS FOR CLUSTERING-BASED RECOMMENDATIONS**

(57) A recommendation system (200) can provide recommendations based on clustering that takes into account user data and latent behavioral functions. In various embodiments, user data can be obtained. User data can be, for example, movie ratings, prior movie category selections, age, location, etc. The user data can be clustered based on one or more latent behavioral functions. Likelihood parameters of a user preference can be determined based on the clustering, and a recommendation can be determined based on the likelihood parameters.

FIG. 5

EP 3 119 094 A1

**Description**

TECHNICAL FIELD

The present disclosure generally relates to recommendation methods and systems and, more particularly, to recommendations based on clustering methods.

BACKGROUND

Home entertainment systems, including television and media centers, are converging with the Internet and providing access to a large amount of available content, such as video, movies, TV programs, music, etc. This expansion in the amount of content available on-demand has been a boon for consumers of content. However, searching through vast catalogues of movies and TV programs, music inventories, video clip databases, etc., can be overwhelming. As a result, recommendation systems have become more popular. Recommendation systems, for example, may be a feature offered by an online movie provider, may be built into a gateway, set-top box, etc., and may be a function of software applications run on personal computers, smart phones, etc.

SUMMARY

Examples and details are provided herein of systems and methods for providing recommendations based on clustering that takes into account user data and latent behavioral functions. In various embodiments, user data can be obtained. User data can be, for example, movie ratings, prior movie category selections, age, location, etc. The user data can be clustered based on one or more latent behavioral functions. Likelihood parameters of a user preference can be determined based on the clustering, and a recommendation can be determined based on the likelihood parameters.

In various embodiments, clustering the user data can include determining a first view based on features of the user data, determining a second view based on the latent behavioral function, determining an initial partition, and adjusting the initial partition based on feedback from the first and second views. In some embodiments, determining the first view can include determining parameters of the features based on a predetermined first distribution, determining the second view includes determining parameters of the latent behavioral functions based on a predetermined second distribution, and determining the initial partition includes determining initial features and initial latent behavioral functions. The predetermined distributions can be, for example, Gaussian distributions.

In various embodiments, the clustering can be based on a mixture model including a plurality of components. In this case, initial mixture proportions of the plurality of components of the mixture model can be determined, and an initial component assignment of the mixture model can be determined.

BRIEF DESCRIPTION OF THE DRAWINGS

FIG. 1 is a block diagram of an example of a system for providing cluster-based recommendations and delivering content according to various embodiments.

FIG. 2 is a block diagram of an example of a computing system, such as a set-top box/digital video recorder (DVR), gateway, etc., that can include cluster-based recommendation functionality according to various embodiments.

FIG. 3 illustrates an example of a touch panel input device according to various embodiments.

FIG. 4 illustrates another example of an input device according to various embodiments.

FIG. 5 illustrates a model of dual-view clustering according to various embodiments.

FIG. 6 is a flowchart that illustrates a method of determining recommendations according to various embodiments.

FIG. 7 is a flowchart that illustrates an example of a method of clustering based on user data and latent behavioral functions.

FIG. 8 is a flowchart that illustrates further details that can be implemented according to various embodiments.

FIG. 9 is a flowchart that illustrates further details that can be implemented in systems that consider more than one component according to various embodiments.

It should be understood that the drawings are for purposes of illustrating the concepts of the disclosure and are not necessarily the only possible configurations for illustrating the disclosure.

DETAILED DESCRIPTION

Consumers of content, such as movies, television (TV), music, etc., can have difficulty finding content they are likely to enjoy. Consumers may be faced with browsing through massive databases of content, for example, and can become overwhelmed and frustrated. Consumers may wish to obtain recommendations for content items (also referred to herein simply as "items"), e.g., movies, TV shows, songs, etc., from a recommender, such as a recommendation systems, a recommendation service, etc.

Recommenders can tailor recommendations by analyzing user information to determine indicators (also referred to herein as "recommendation indicators"), such as measures of the user's preferences (e.g., likes, dislikes), predicted ratings, etc., that can be used to determine recommendations tailored to the user. For example, a recommender can require users to provide rating information, such as the user's personal ratings for various content items, and can analyze the user ratings to predict ratings that the user would give to other content items. These predicted ratings can be used to provide recommendations to the user. For example, the recommender could determine a user's predicted ratings for a number of content items (e.g., all of the content items in the recommender's catalog), sort the predicted ratings to determine the content items with the highest predicted ratings, and provide the user information about the content items with the highest predicted ratings. For example, a recommender can determine the top-k content items, where k is a number chosen by the recommender (e.g., the top-5 content items having the five highest predicted ratings), and provide the names of the top-k content items to the user as a recommendation.

Predicted ratings are merely one example of an indicator that can be used to determine recommendations, and one skilled in the art will readily appreciate that there are many such recommendation indicators that can be determined by analyzing user information. In fact, vast resources in industry and academia are devoted to predicting what users will like by analyzing user information, such as biographical information (e.g., age, sex, race, etc.), economic information (e.g. income level, etc.), preference information (e.g., what content items users consume and how the users rate the content items, etc.), and the like.

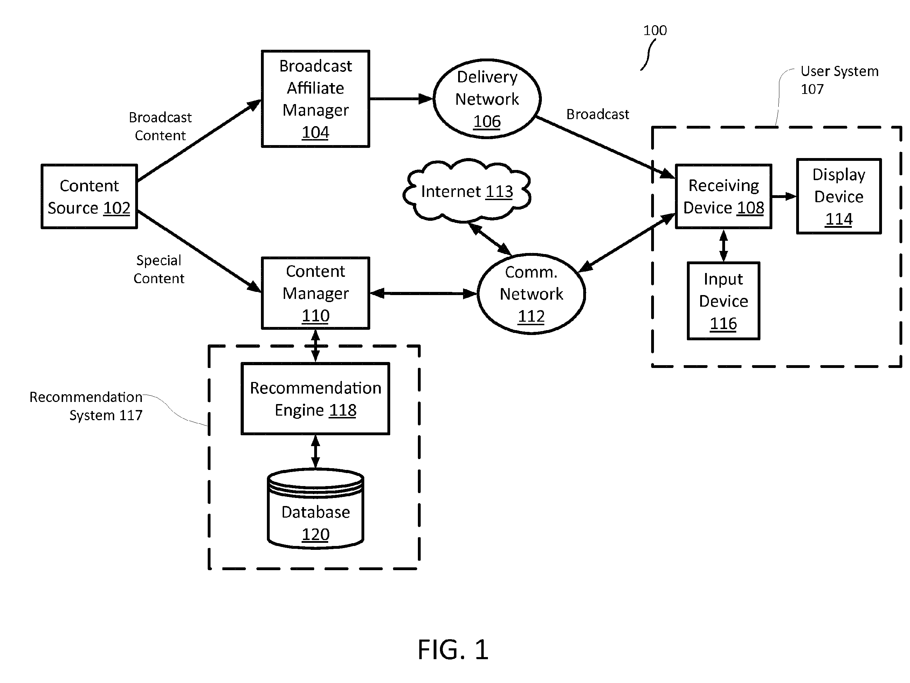

In various embodiments, cluster-based recommendations may be implemented in the recommendation system of an online movie provider. FIGS. 1-4 illustrate an example of an implementation in which cluster-based recommendations can be provided by a recommendation system of an online content provider. It should be understood that various embodiments can include, for example, stand-alone cluster-based recommendation systems built into a gateway, set-top box, etc., and that various embodiments can be implemented in software applications that can be executed on personal computers, smart phones, etc.

FIG. 1 illustrates a block diagram of an example of a system 100 for delivering content and cluster-based recommendations to a home or end user. The content can originate from a content source 102, such as a movie studio or production house. The content may be supplied in at least one of two forms. One form may be a broadcast form of content. The broadcast content is provided to the broadcast affiliate manager 104, which is typically a national broadcast service, such as the American Broadcasting Company (ABC), National Broadcasting Company (NBC), Columbia Broadcasting System (CBS), etc. The broadcast affiliate manager may collect and store the content, and may schedule delivery of the content over a delivery network, shown as delivery network 106. Delivery network 106 may include satellite link transmission from a national center to one or more regional or local centers. Delivery network 106 may also include local content delivery using local delivery systems such as over the air broadcast, satellite broadcast, or cable broadcast. The locally delivered content is provided to a user system 107 in a user's home.

User system 107 can include a receiving device 108 that can receive and process content and perform other functions described in more detail below. It is to be appreciated that receiving device 108 can be, for example, a set-top box, a digital video recorder (DVR), a gateway, a modem, etc. Receiving device 108 may act as entry point, or gateway, for a home network system that includes additional devices configured as either client or peer devices in the home network.

User system 107 can also include a display device 114. In some embodiments, display device 114 can be an external display coupled to receiving device 108. In some embodiments, receiving device 108 and display device 114 can be parts of a single device. The display device 114 may be, for example, a conventional 2-D type display, an advanced 3-D display, etc. User system 107 can also include an input device 116, such as a remote controller, a keyboard, a mouse, a touch panel, a touch screen, etc. The input device 116 may be adapted to provide user control for the receiving device 108 and/or the display device 114. In some embodiments, input device 116 may be an external device that can couple to receiving device 108 via, for example, a wired connection, a signal transmission system, such as infra-red (IR), radio frequency (RF) communications, etc., and may include standard protocols such as universal serial bus (USB), infra-red data association (IRDA) standard, Wi-Fi, Bluetooth and the like, proprietary protocols, etc. In some embodiments, receiving device 108 and input device 116 can be part of the same device. Operations of input device 116 will be described in further detail below.

A second form of content is referred to as special content. Special content may include, for example, premium viewing content, pay-per-view content, Internet access, other content otherwise not provided to the broadcast affiliate manager, e.g., movies, video games, other video elements, etc. The special content may be content requested by the user, such as a webpage, a movie download, etc. The special content may be delivered to a content manager 110. The content manager 110 may be a service provider, such as an Internet website, affiliated, for instance, with a content provider, broadcast service, or delivery network service. The content manager 110 may also incorporate Internet content into the delivery system. The content manager 110 may deliver the content to the user's receiving device 108 over a communication network, e.g., communication network 112. Communication network 112 may include high-speed broadband Internet type communications systems. It is important to note that the content from the broadcast affiliate manager 104 may also be delivered using all or parts of communication network 112 and content from the content manager 110 may be delivered using all or parts of delivery network 106. In some embodiments, the user may obtain content, such as webpages, etc., directly from the Internet 113 via communication network 112 without necessarily having the content managed by the content manager 110.

Several adaptations for utilizing the separately delivered content may be possible. In one possible approach, the special content is provided as an augmentation to the broadcast content, providing alternative displays, purchase and merchandising options, enhancement material, etc. In another embodiment, the special content may completely replace some programming content provided as broadcast content. Finally, the special content may be completely separate from the broadcast content, and may simply be a media alternative that the user may choose to utilize. For instance, the special content may be a library of movies that are not yet available as broadcast content.

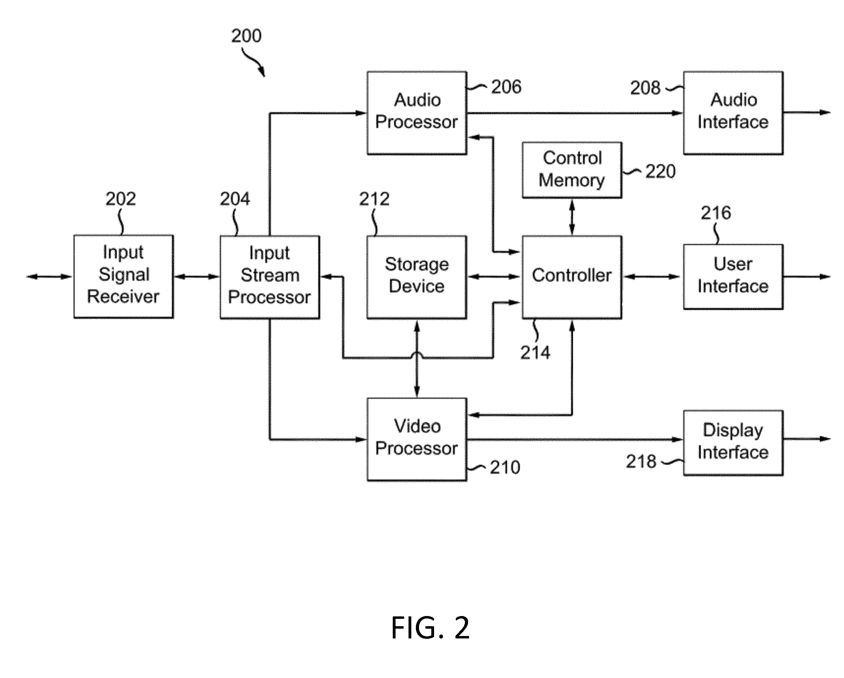

The receiving device 108 may receive different types of content from one or both of delivery network 106 and communication network 112. The receiving device 108 processes the content, and provides a separation of the content based on user preferences and commands. The receiving device 108 may also include a storage device, such as a hard drive or optical disk drive, for recording and playing back audio and video content. Further details of the operation of the receiving device 108 and features associated with playing back stored content will be described below in relation to FIG. 2. The processed content is provided to display device 114.

In the example of FIG. 1, content manager 110 also controls a recommendation system 117 that can include a recommendation engine 118 and a database 120. Recommendation system 117 can process data using cluster-based methods that can be used to provide recommendations to the user as will be described in more detail below. Although recommendation system 117 is controlled by content manager 110 in this example, it should be appreciated that in some embodiments, recommendation systems can be operated by other entities, such as separate recommendation service providers whose primary service is providing recommendations.

FIG. 2 includes a block diagram of an example of a computing system, such as a receiving device 200. Receiving device 200 may operate similar to receiving device 108 described in FIG. 1 and may be included as part of a gateway device, modem, set-top box, personal computer, television, tablet computer, smartphone, etc. Receiving device 200 may also be incorporated into other systems including an audio device or a display device. The receiving device 200 may be, for example, a set top box coupled to an external display device (e.g., a television), a personal computer coupled to a display device (e.g., a computer monitor), etc. In some embodiments, the receiving device 200 may include an integrated display device, for example, a portable device such as a tablet computer, a smartphone, etc.

In receiving device 200 shown in FIG. 2, the content is received by an input signal receiver 202. The input signal receiver 202 may include, for example, receiver circuits used for receiving, demodulation, and decoding signals provided over one of the several possible networks including over the air, cable, satellite, Ethernet, fiber and phone line networks. The desired input signal may be obtained based on user input provided through a user interface 216. For example, the user input may include search terms for a search, and the input signal received by input signal receiver 202 may include search results. User interface 216 can be coupled to an input device, such as input device 116, and can receive and process corresponding user inputs, for example, keystrokes, button presses, touch inputs, such as gestures, audio input, such as voice input, etc., from the input device. User interface 216 may be adapted to interface to a cellular phone, a tablet, a mouse, a remote controller, etc.

The decoded output signal is provided to an input stream processor 204. The input stream processor 204 performs the final signal selection and processing, and includes separation of video content from audio content for the content stream. The audio content is provided to an audio processor 206 for conversion from the received format, such as a compressed digital signal, to an analog waveform signal. The analog waveform signal is provided to an audio interface 208 and further to the display device or audio amplifier. In some embodiments, the audio interface 208 may provide a digital signal to an audio output device or display device using a High-Definition Multimedia Interface (HDMI) cable, an audio interface such as via a Sony/Philips Digital Interconnect Format (SPDIF), etc. The audio interface may also include amplifiers for driving one more sets of speakers. The audio processor 206 also performs any necessary conversion for the storage of the audio signals.

The video output from the input stream processor 204 is provided to a video processor 210. The video signal may be one of several formats. The video processor 210 provides, as necessary, a conversion of the video content, based on the input signal format. The video processor 210 also performs any necessary conversion for the storage of the video signals.

A storage device 212 stores audio and video content received at the input. The storage device 212 allows later retrieval and playback of the content under the control of a controller 214 and also based on commands, e.g., navigation instructions such as fast-forward (FF) and rewind (RW), received from user interface 216. The storage device 212 may be, for example, a hard disk drive, one or more large capacity integrated electronic memories, such as static RAM (SRAM), or dynamic RAM (DRAM), an interchangeable optical disk storage system such as a compact disk (CD) drive or digital video disk (DVD) drive, etc.

The converted video signal, from the video processor 210, either originating from the input or from the storage device 212, is provided to the display interface 218. The display interface 218 further provides the display signal to a display device, such as display device 114, described above. The controller 214 is interconnected via a bus to several of the components of the device 200, including the input stream processor 204, audio processor 206, video processor 210, storage device 212, and user interface 216. The controller 214 manages the conversion process for converting the input stream signal into a signal for storage on the storage device or for display. The controller 214 also manages the retrieval and playback of stored content. Furthermore, as will be described below, the controller 214 can receive cluster-based information input by a user, as described below in more detail.

The controller 214 is further coupled to control memory 220 (e.g., volatile or nonvolatile memory, including RAM, SRAM, DRAM, ROM, programmable ROM (PROM), flash memory, electronically programmable ROM (EPROM), electronically erasable programmable ROM (EEPROM), etc.) for storing information and instruction code for controller 214. Control memory 220 may store instructions for controller 214. Control memory 220 may also store a database of elements, such as graphic elements containing content. The database may be stored as a pattern of graphic elements, such as graphic elements containing content, various graphic elements used for generating a displayable user interface for display interface 218, and the like. In some embodiments, the memory may store the graphic elements in identified or grouped memory locations and use an access or location table to identify the memory locations for the various portions of information related to the graphic elements. Additional details related to the storage of the graphic elements will be described below. Further, the implementation of the control memory 220 may include several possible embodiments, such as a single memory device, more than one memory circuit communicatively connected or coupled together to form a shared or common memory, etc. Still further, the memory may be included with other circuitry, such as portions of bus communications circuitry, in a larger circuit.

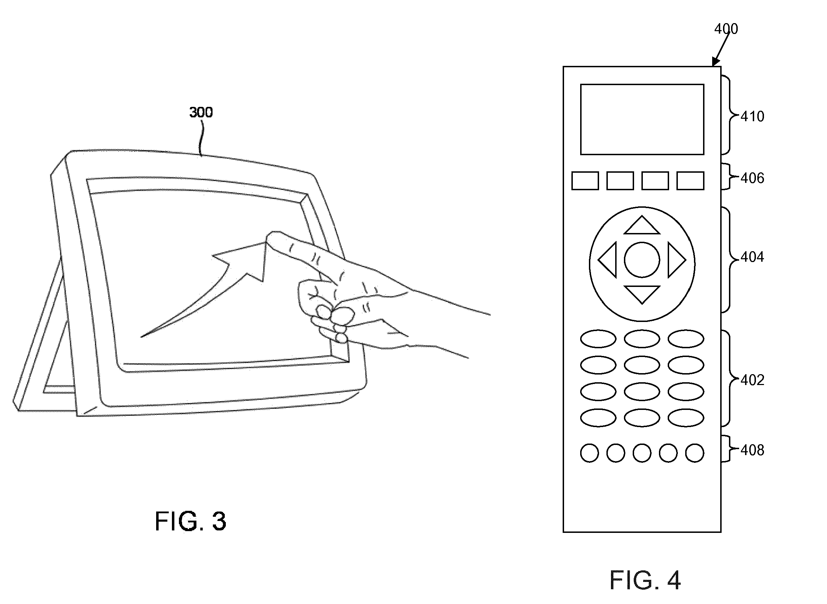

FIGS. 3 and 4 represent two examples of input devices, 300 and 400, such as input device 116. Input devices 300 and 400 can couple with a user interface, such as user interface 216. Input devices 300 and 400 may be used to initiate and/or select various functions available to a user related to the acquisition, consumption, access and/or modification of content, such as multimedia content, broadcast content, Internet content, etc. Input devices 300 and 400 can also allow a user to input information and requests for recommendations.

FIG. 3 illustrates an example of a touch panel input device 300. The touch panel device 300 may be interfaced, for example, via the user interface 216 of the receiving device 200 in FIG. 2. The touch panel device 300 allows operation of the receiving device or set top box based on hand movements, or gestures, and actions translated through the panel into commands for the set top box or other control device. This is achieved by the controller 214 generating a touch screen user interface including at least one user selectable image element enabling initiation of at least one operational command. The touch screen user interface may be pushed to the touch screen device 300 via the user interface 216. In some embodiments, the touch screen user interface generated by the controller 214 may be accessible via a webserver executing on one of the user interface 216. The touch panel 300 may serve as a navigational tool to navigate a grid display, as described above for search results. In some embodiments, the touch panel 300 may serve as a display device allowing the user to more directly interact with the navigation through the display of content. The touch panel 300 can also include a camera element and/or at least one audio sensing element.

In some embodiments, the touch panel 300 employs a gesture sensing controller or touch screen enabling a number of different types of user interaction. The inputs from the controller are used to define gestures and the gestures, in turn, define specific contextual commands. The configuration of the sensors may permit defining movement of a user's fingers on a touch screen or may even permit defining the movement of the controller itself in either one dimension or two dimensions. Two-dimensional motion, such as a diagonal, and a combination of yaw, pitch and roll can be used to define any three-dimensional motions, such as a swing. Gestures are interpreted in context and are identified by defined movements made by the user. Depending on the complexity of the sensor system, only simple one-dimensional motions or gestures may be allowed. For instance, a simple right or left movement on the sensor as shown here may produce a fast forward or rewind function. In addition, multiple sensors could be included and placed at different locations on the touch screen. For instance, a horizontal sensor for left and right movement may be placed in one spot and used for volume up/down, while a vertical sensor for up and down movement may be placed in a different spot and used for channel up/down. In this way specific gesture mappings may be used. For example, the touch screen device 300 may recognize alphanumeric input traces which may be automatically converted into alphanumeric text displayable on one of the touch screen device 300 or output via display interface 218 to a primary display device.

FIG. 4 illustrates another example of an input device, input device 400. The input device 400 may, for example, be used to interact with the user interfaces generated by the system and which are output for display by the display interface 218 to a primary display device (e.g. television, monitor, etc). The input device of FIG. 4 may be formed as a remote control having a 12-button alphanumerical keypad 402 and a navigation section 404 including directional navigation buttons and a selector button. The input device 400 may also include a set of function buttons 406 that, when selected, initiate a particular system function (e.g. menu, guide, DVR, etc). In some embodiments, the input device 400 may include a set of programmable application specific buttons 408 that, when selected, may initiate a particularly defined function associated with a particular application executed by the controller 214. Input device 400 may include a display screen 410 that can display information, such as program information, menu information, navigation information, etc. The depiction of the input device in FIG. 4 is merely an example, and it should be appreciated that various input devices may include any number and/or arrangement of buttons that enable a user to interact with the user interface process according to various embodiments. Additionally, it should be noted that users may use either or both of the input devices depicted and described in FIGS. 3 and 4 simultaneously and/or sequentially to interact with the system. Other input devices are considered within the scope of the present disclosure.

In some embodiments, the user input device may include at least one of an audio sensor and a visual sensor. For example, the audio sensor may sense audible commands issued from a user and translate the audible commands into functions to be executed by the user. The visual sensor may sense the user's presence and match user information of the sensed user(s) to stored visual data in the usage database 120 in FIG. 1. Matching visual data sensed by the visual sensor enables the system to automatically recognize the user's presence and retrieve any user profile information associated with the user. Additionally, the visual sensor may sense physical movements of at least one user present and translate those movements into control commands for controlling the operation of the system. In this embodiment, the system may have a set of pre-stored command gestures that, if sensed, enable the controller 214 to execute a particular feature or function of the system. An example of a type of gesture command may include the user waving his or her hand in a rightward direction which may initiate a fast forward command or a next screen command or a leftward direction which may initiate a rewind or previous screen command depending on the current context. This description of physical gestures able to be recognized by the system is merely exemplary and should not be taken as limiting. Rather, this description is intended to illustrate the general concept of physical gesture control that may be recognized by the system and persons skilled in the art could readily understand that the controller may be programmed to specifically recognize any physical gesture and allow that gesture to be tied to at least one executable function of the system.

Behavioral functions are any function which, if known, can be used to predict the behavior of a user based on a given set of data about a user, e.g., observations. For example, given a set of data including a user's selections of movies in particular categories, e.g., action, romance, drama, comedy, etc., and the user's ratings for the movies, a behavioral function may be applied to the set of data to determine a probability that the user will enjoy watching another movie from one of the categories. An example of a behavioral function in this case might include an equation that weights each movie category based on a combination of the user's average ratings for movies in the category and the percentage of total movies watched by the user in the category. The resulting weights for each movie category can represent how likely the user will enjoy a movie from the category. In this regard, behavioral functions can be useful in recommendation systems, where behavioral functions may indicate preference patterns, such as utility functions over the items when applied to the observed behavior, such as a list of pairwise choices, such as ratings per category, which is user data that recommendation systems often collect.

While some relationships between user data and user movie preferences may be known, some relationships between user data and user movie preferences may not be known. For example, an unknown relationship may exist between the geographic location of the user's residence, e.g., the user's zip code, city of residence, etc., and a user's movie preferences. An unknown relationship such as this may be called a latent behavioral function. In other words, a latent behavioral function is an underlying behavior that is not readily discernable, but can affect movie preferences. More specifically, there may be specific variables within a behavioral function of geographic location that are relevant to prediction of movie preference. In various embodiments, latent behavioral functions and latent variables can be inferred, and the inference can be used to help provide recommendations. In various embodiments, the inference of latent behavioral functions can be improved through clustering.

Clustering is a mathematical method that can take into account a set of features, e.g., user data, and determine underlying groupings of the features that may not be readily apparent. In other words, clustering can find latent groups, i.e., groups of features that have relationships that were previously unknown. In this way, for example, latent behavioral functions regarding user movie preferences can be inferred from user data. This can be particularly useful in situations in which a recommender does not have user data that is typically useful in determining recommendations, such as user ratings and previously selected movies, but the recommender has some data about the user, such as user geographical residence.

In various embodiments, a method of determining a recommendation can include dual-clustering, i.e., performing clustering on user data, e.g., feature vectors, and also performing clustering to help find user latent behavioral functions, while seeking agreement between these two clusterings.

In order to find an agreement, the method can penalize solutions in which users have similar features but lack similar preferences. For example, if the user data includes user movie ratings and user city of residence, the method can penalize solutions in which users that live in the same city give very different ratings for the same movies. In other words, the method can be designed to prefer groupings of users that have similar features and also share similar preferences.

For example, a recommendation system may have user data that includes: user movie ratings, previously selected movie categories, user age, user salary, and user location. These five features can be represented by a five-element feature vector. A conventional recommendation system may ignore the age, salary, and location data because a relationship between these three features and movie preferences is not known, and may simply apply a known behavioral function to the ratings and prior movie selections data to obtain a movie recommendation for a user. However, in various embodiments, all five features of the user data may be included in the analysis, and one or more latent behavioral functions can be inferred. In other words, it may not be known *a priori* which of the three features, age, salary, and location, is more important to the prediction of movie preferences. However, the methods of various embodiments can infer which feature or features is more important, and hence, which features may be used to help determine movie recommendations. For example, it might be discovered that users of the same age share similar movie preferences, which would imply a higher weight is given to age in a latent behavioral function, while salary may be less important, and therefore weighted less.

In various embodiments, latent behavioral functions can be inferred through clustering methods. This can, for example, allow more meaningful clustering in settings where users, besides being described through feature vectors of behavioral functions, also perform some observable actions that can be modeled as the output of a latent behavioral function. One advantage can be that, by assuming that users in the same cluster share similar latent functions, various embodiments may leverage inference of these functions. In the case of recommender systems, for instance, this may be used to alleviate the cold-start problem, i.e., the fact that user preferences cannot be inferred until the user has interacted with the system for a while.

One of the difficulties in dealing with latent behavioral functions is that, since these functions are latent, they are typically not representable in a feature-like way and therefore traditional clustering methods may not be directly applicable. In various embodiments, it can be useful to think of features and behaviors as two different views or representations of users, and the goal of the recommendation system is to find the partition of users that is most consensual between the different views. In this sense, various embodiments can be directed to a multi-view clustering problem in which one of the views depends on latent variables that need to be inferred.

In various embodiments, multi-view clustering can be extended to deal with cases where one of the views comprises latent functions that are only indirectly observed through their outputs. Various embodiments can include a dual-view mixture model where every component represents two probability densities: one over the space of features and the other over the space of latent behavioral functions. In various embodiments, both the clusters and the latent functions can be inferred. Moreover, the inference of the latent functions can allow predictions on future user behaviors to be made. With the assumptions that users in the same cluster share both similar features and similar latent functions and that users with similar features and behaviors are in the same cluster, various embodiments including a dual-view model can require fewer examples than single-view models to make good inferences.

In various embodiments, a Bayesian approach that models user latent behavioral functions via Dirichlet Process Mixture Models can be used. In various embodiments, this mixture model can be used also to infer the cluster assignment of every user. In this regard, in various embodiments the model can cluster users based on their utility functions as well as user features.

With regard to mixture models, one skilled in the art would understand that when a set of observations $x_1, x_2, ... x_n$ cannot be properly fitted by a single distribution, a better fit may be obtained by considering that different subsets of observations come from different component distributions. In other words, a mixture model might better fit the set of observations. Then, instead of a unique set of parameters $\theta$ of a single distribution, there may be a need to infer K sets of parameters $\theta_1, ..., \theta_K$ of K components and the assignments $z_1, ..., z_n$ of individual observations to one of these components. The model, which is an example of a mixture model, can be expressed as follows:

$$x_i | z_i, \theta_{z_i} \sim F(\theta_{z_i})$$

$$z_i \sim \text{Discrete}(\pi) \tag{1}$$

where $\pi = \{p_1, ... p_k\}$ contains the probability of belonging to each component and F is the likelihood function over the observations. In Bayesian settings it is common to add priors over these parameters, resulting in a model such as:

$$x_i | z_i, \theta_{z_i} \sim F(\theta_{z_i})$$

$$\theta_j \sim G_0$$

$$z_i \sim \text{Discrete}(\pi)$$

$$\pi \sim \text{Dirichlet}(\alpha) \tag{2}$$

where $G_0$ is the base distribution and $\alpha$ the concentration parameter. Inference over z allows mixture models to be used as clustering methods.

Various embodiments can employ what will be referred to herein as dual-view mixture models, which can be viewed as an extension of mixture models to account both for features and latent behavioral functions.

In general, behavioral functions are linked to observed behaviors through a likelihood function p(y|f) where y represents an observation and f the latent behavioral function. Let $a_u$ be the set of (observed) features of user u. Let $f_u$ be a (latent) function of user u. Let $y_u$ be the (observed) outcome of $f_u$. By slightly adapting the notation from last section the variables of the dual model can be described as follows:

$$a_u | z_i, \theta_{zu}^{(a)} \sim F^{(a)}(\theta_{zu}^{(a)})$$

$$f_u | z_i, \theta_{zu}^{(f)} \sim F^{(f)}(\theta_{zu}^{(f)})$$

$$y_u \sim p(y_u | f_u)$$

$$\theta_j^{(a)} \sim G_0^{(a)}$$

$$\theta_j^{(f)} \sim G_0^{(f)}$$

$$z_i \sim \text{Discrete}(\pi)$$

$$\pi \sim \text{Dirichlet}(\alpha) \tag{3}$$

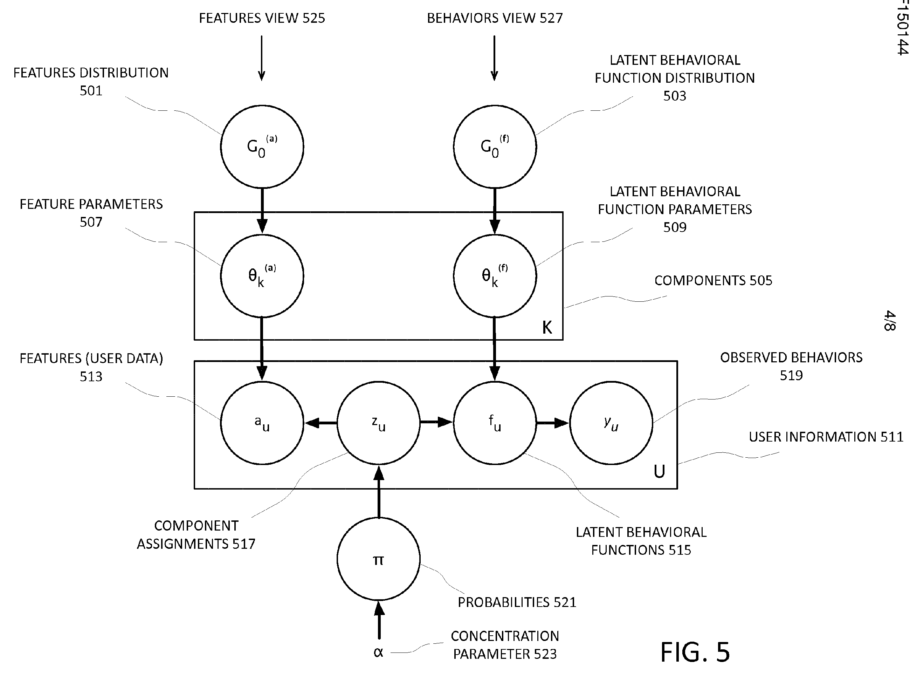

where the superindex (a) is used for elements in the features view and the superindex (f) is used for elements in the latent functions view, henceforth behaviors view. Otherwise, the structures are similar except for $y_u$, which represents the set of observed behaviors for user u. The corresponding Probabilistic Graphical Model is illustrated in FIG. 5.

FIG. 5 illustrates a graphical model of dual-view clustering according to various embodiments. The model includes a features distribution 501 and a latent behavioral function distribution 503. In various embodiments, features distribution 501 and latent behavioral function distribution 503 may be constrained, for example, to Gaussian functions. The model also includes one or more components 505. Each component 505 can include feature parameters 507 and latent behavioral function parameters 509. The model also includes user information 511 including features 513, e.g., user data, one or more latent behavioral functions 515, component assignments 517, and observed behaviors 519. The model also includes probabilities 521 and a concentration parameter 523. A features view 525 can be formed based on features distribution 501, feature parameters 507, and features 513. Likewise, a behaviors view 527 can be formed based on latent behavioral function distribution 503, latent behavioral function parameters 509, and latent behavioral functions 515.

Every component 505 has two distributions: one for features and one for latent behavioral functions. Latent behavioral functions 515 are not directly observable, but they may be inferred through some observations if we have a likelihood function of observations given the latent functions. The model can also be utilized in a process to determine recommendations according to various embodiments.

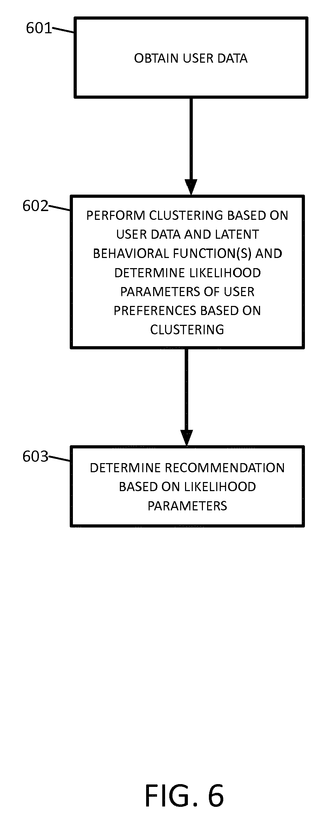

FIG. 6 is a flowchart that illustrates a method of determining recommendations according to various embodiments. The method may be performed, for example, by a recommendation system such as recommendation system 117 described above. The recommendation system can obtain (601) user data, such as user movie ratings, previously selected movie categories, user age, user salary, and user location. The recommendation system can perform (602) clustering based on the user data and one or more latent behavioral functions, as described in more detail below, and determining likelihood parameters of user preferences, i.e., parameters of likelihood function p(y|f) described above, based on the clustering. The recommendation system can determine (604) a recommendation for a user based on the likelihood parameters.

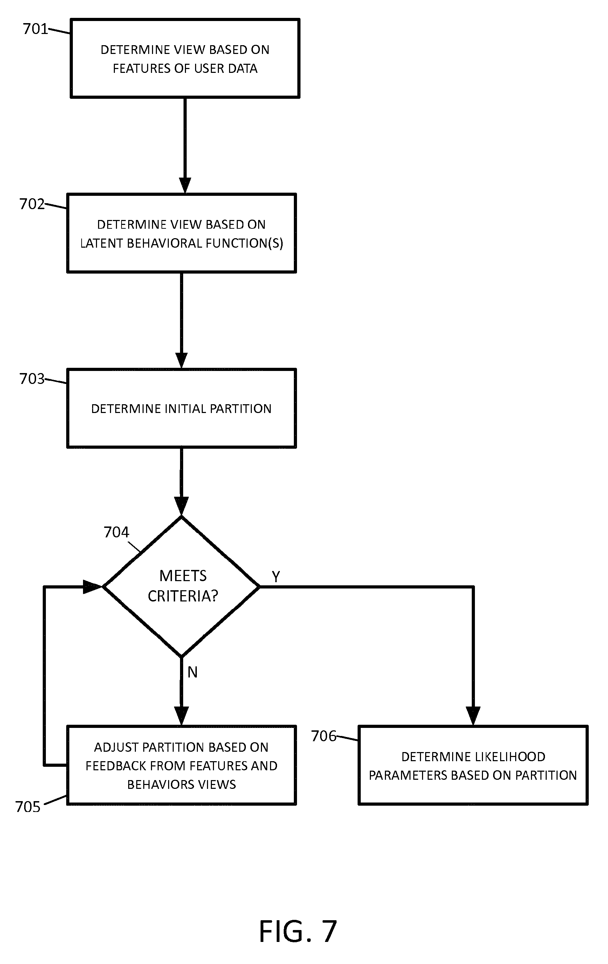

FIG. 7 illustrates an example of a method of clustering based on user data and latent behavioral functions. The recommendation system can determine (701) a features view based on features of user data and determine (702) a behaviors view based on the one or more latent behavioral functions. The recommendation system can determine (703) an initial partition, e.g., including initial component assignments 517 and initial latent behavioral functions 515 in the model of FIG. 5. The recommendation system can determine (704) whether the initial partition satisfies threshold criteria for fit, e.g., based on probabilities 521.

In this regard, given the user assignments z, variables in one view are conditionally independent from variables in the other view, which means their inferences can be considered separately. However, inference of z uses information from both views. The conditional probability of z given all the other variables is proportional to the product of its prior and the likelihood of both views:

$$p(z|\cdot) \propto p(z|\pi)p(a|\theta^{(a)}, z)p(f|\theta^{(f)}, z) \qquad (4)$$

The information given by each view is conveyed through the likelihood factors $p(a|\theta^{(a)},z)$ and $p(f|\theta^{(f)},z)$. The ratio between the conditional probability of a partition z and the conditional probability of a partition z is:

$$\frac{p(z|\cdot)}{p(z'|\cdot)} = \frac{p(z|\pi)\, p(a|\theta^{(a)},z)\, p(f|\theta^{(f)},z)}{p(z'|\pi)\, p(a|\theta^{(a)}, z')\, p(f|\theta^{(f)}, z')} \qquad (5)$$

where the contribution of each view depends on how much more likely z is over the other assignments in that view. An extreme case would be a uniform likelihood in one of the views, meaning that all partitions z are equally likely. In that case, the other view leads the inference.

The two views provide reciprocal feedback to each other through z. This means that if one view is more confident about a given z, it will not only have more influence on z but also it will force the other view to re-consider its beliefs and adapt its latent parameters to fit the suggested z. If the initial partition does not satisfy the criteria, the partition can be adjusted (705) based on feedback from the features view and the behaviors view, as described in more detail below. The process can be repeated until the partition satisfies the criteria, and then the likelihood parameters can be determined (706) based on the partition.

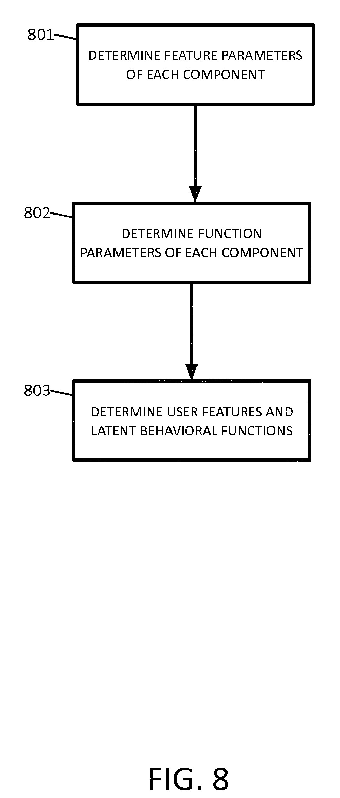

FIG. 8 illustrates further details that can be implemented according to various embodiments. In order to determine the features view, the recommendation system can determine (801) parameters of a predetermined first distribution over the features. For example, in various embodiments, the predetermined distribution can be a Gaussian distribution, and the parameters can be mean and variance. Likewise, in order to determine the behaviors view, the recommendation system can determine (802) parameters of the latent behavioral functions based on a predetermined second distribution, such as a Gaussian distribution. Although Gaussian distributions are used in this example, one skilled art would readily understand that other distributions can be used. The recommendation system can determine the initial partition based on determining (803) initial features and initial latent behavioral functions.

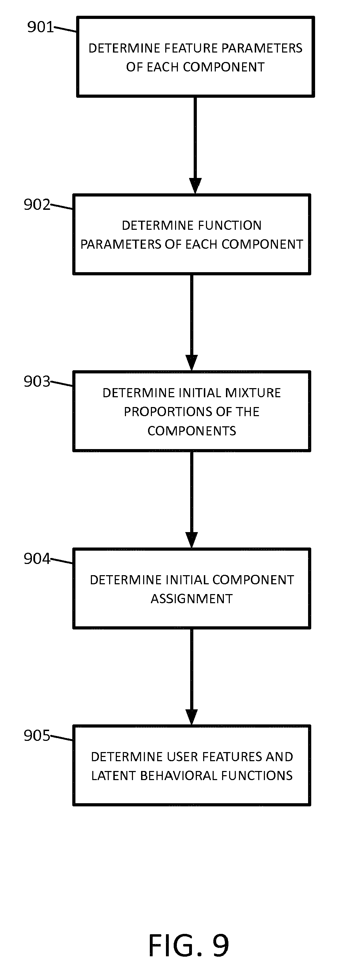

FIG. 9 illustrates further details that can be implemented in systems that consider more than one component according to various embodiments. In order to determine the features view, the recommendation system can determine (901) parameters of a predetermined first distribution over the features. For example, in various embodiments, the predetermined distribution can be a Gaussian distribution, and the parameters can be mean and variance. Likewise, in order to determine the behaviors view, the recommendation system can determine (902) parameters of the latent behavioral functions based on a predetermined second distribution, such as a Gaussian distribution. As mentioned above, although Gaussian distributions are used in this example, one skilled in the art would readily understand that other distributions can be used. Because more than one component is used in this example, the recommendation system can determine (903) initial mixture proportions of the components, and can determine (904) initial component assignments. The recommendation system can then determine the initial partition based on determining (905) initial features and initial latent behavioral functions.

In the foregoing examples, the number of components K is considered to be known. Nonetheless, if $K \rightarrow \infty$ and the solution is marginalized over the mixture weights $\pi$, one skilled in the art would understand that the problem becomes a Dirichlet Process (DP) based on a Chinese Restaurant Process (CRP) prior over the user assignments, which automatically infers the number of components. Since $\pi$ is integrated out, user assignments are not independent anymore. Instead, the probability of a user u to be assigned to a non-empty (active) component k, given the assignments of all other users $z\text{-}_u$, is:

$$p(z_u = k s.t n_k > 0 | z-_u) \propto n_k \qquad (6)$$

where nk is the number of users already assigned to that component. The probability of assigning a user u to any of the infinite empty (non-active) components is:

$$p(z_u = k s.t n_k = 0 | z-_u) \propto \alpha \qquad (7)$$

These two equations reflect a generative process that assigns users to clusters in a rich-get-richer manner. The more users in a component, the more attractive this component becomes. Empty components also have a chance of being filled. Despite the appearance of these equations, the idea behind the inference of z remains the same. The only differences between the finite and the infinite cases are the number of components and the probabilities to be assigned to each component.

It should be appreciated by those skilled in the art that the methods described above may be implemented by, for example, a computing system such as a general purpose computer through computer-executable instructions (e.g., software, firmware, etc.) stored on a computer-readable medium (e.g., storage disk, memory, etc.) and executed by a computer processor. Referring to FIG. 2, for example, software implementing one or more methods shown in the flowcharts could be stored in storage device 212 and executed by controller 214. It should be understood that in various embodiments, various elements shown in the figures may be implemented in various forms of hardware, software or combinations thereof. That is, various elements may be implemented in a combination of hardware and software on one or more appropriately programmed general-purpose devices, which may include a processor, memory and input/output interfaces.

It should also be appreciated that although various examples of various embodiments have been shown and described in detail herein, those skilled in the art can readily devise other varied embodiments that still remain within the scope of this disclosure.

All examples and conditional language recited herein are intended for instructional purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read only memory ("ROM") for storing software, random access memory ("RAM"), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function, software in any form, including, therefore, firmware, microcode or the like, combined with appropriate circuitry for executing that software to perform the function, etc. The disclosure as defined by such claims resides in the fact that the functionalities provided by the various recited means are combined and brought together in the manner which the claims call for. It is thus regarded that any means that can provide those functionalities are equivalent to those shown herein.

**Claims**

1. A recommendation system (200) comprising:

    a processor (214); and
    a memory (220) storing instructions configured to cause the processor to:

        obtain user data;
        cluster the user data based on a latent behavioral function;
        determine likelihood parameters of a user preference based on the clustering; and
        determine a recommendation based on the likelihood parameters.

2. The system of claim 1, wherein clustering the user data includes determining a first view based on features of the user data, determining a second view based on the latent behavioral function, determining an initial partition, and adjusting the initial partition based on feedback from the first and second views.

3. The system of claim 2, wherein determining the first view includes determining parameters of a predetermined first distribution over the features, determining the second view includes determining parameters of the latent behavioral functions based on a predetermined second distribution, and determining the initial partition includes determining initial features and initial latent behavioral functions.

4. The system of claim 3, wherein the first distribution includes a Gaussian distribution.

5. The system of claim 3, wherein the clustering is based on a mixture model including a plurality of components, and the instructions further cause the processor to:

        determine initial mixture proportions of the plurality of components of the mixture model; and
        determine an initial component assignment of the mixture model.

6. A non-transitory computer-readable medium (212) storing computer-executable instructions executable to perform a method for determining a recommendation, the method comprising:

        obtaining user data;
        clustering the user data based on a latent behavioral function;
        determining likelihood parameters of a user preference based on the clustering; and
        determining a recommendation based on the likelihood parameters.

7. The non-transitory computer-readable medium of claim 6, wherein clustering the user data includes determining a first view based on features of the user data, determining a second view based on the latent behavioral function, determining an initial partition, and adjusting the initial partition based on feedback from the first and second views.

8. The non-transitory computer-readable medium of claim 7, wherein determining the first view includes determining parameters of a predetermined first distribution over the features, determining the second view includes determining parameters of the latent behavioral functions based on a predetermined second distribution, and determining the initial partition includes determining initial features and initial latent behavioral functions.

9. The non-transitory computer-readable medium of claim 8, wherein the first distribution includes a Gaussian distribution.

10. The non-transitory computer-readable medium of claim 8, wherein the clustering is based on a mixture model including a plurality of components, the method further comprising:

   determining initial mixture proportions of the plurality of components of the mixture model; and
   determining an initial component assignment of the mixture model.

11. A method for determining a recommendation, the method comprising:

   obtaining user data;
   clustering the user data based on a latent behavioral function;
   determining likelihood parameters of a user preference based on the clustering; and
   determining a recommendation based on the likelihood parameters.

12. The method of claim 11, wherein clustering the user data includes determining a first view based on features of the user data, determining a second view based on the latent behavioral function, determining an initial partition, and adjusting the initial partition based on feedback from the first and second views.

13. The method of claim 12, wherein determining the first view includes determining parameters of a predetermined first distribution over the features, determining the second view includes determining parameters of the latent behavioral functions based on a predetermined second distribution, and determining the initial partition includes determining initial features and initial latent behavioral functions.

14. The method of claim 13, wherein the first distribution includes a Gaussian distribution.

15. The method of claim 13, wherein the clustering is based on a mixture model including a plurality of components, further comprising:

   determining initial mixture proportions of the plurality of components of the mixture model; and
   determining an initial component assignment of the mixture model.

FIG. 1

EP 3 119 094 A1

FIG. 2

EP 3 119 094 A1

FIG. 3

FIG. 4

FIG. 5

601 — OBTAIN USER DATA

602 — PERFORM CLUSTERING BASED ON USER DATA AND LATENT BEHAVIORAL FUNCTION(S) AND DETERMINE LIKELIHOOD PARAMETERS OF USER PREFERENCES BASED ON CLUSTERING

603 — DETERMINE RECOMMENDATION BASED ON LIKELIHOOD PARAMETERS

# FIG. 6

701 — DETERMINE VIEW BASED ON
FEATURES OF USER DATA

702 — DETERMINE VIEW BASED ON
LATENT BEHAVIORAL FUNCTION(S)

703 — DETERMINE INITIAL PARTITION

704

MEETS
CRITERIA?

Y

N

ADJUST PARTITION BASED ON
FEEDBACK FROM FEATURES AND
BEHAVIORS VIEWS

705

706 — DETERMINE LIKELIHOOD
PARAMETERS BASED ON PARTITION

FIG. 7

801 — DETERMINE FEATURE PARAMETERS
OF EACH COMPONENT

802 — DETERMINE FUNCTION
PARAMETERS OF EACH COMPONENT

803 — DETERMINE USER FEATURES AND
LATENT BEHAVIORAL FUNCTIONS

FIG. 8

901 — DETERMINE FEATURE PARAMETERS OF EACH COMPONENT

902 — DETERMINE FUNCTION PARAMETERS OF EACH COMPONENT

903 — DETERMINE INITIAL MIXTURE PROPORTIONS OF THE COMPONENTS

904 — DETERMINE INITIAL COMPONENT ASSIGNMENT

905 — DETERMINE USER FEATURES AND LATENT BEHAVIORAL FUNCTIONS

FIG. 9

## EUROPEAN SEARCH REPORT

Europäisches
Patentamt

European
Patent Office

Office européen
des brevets

Application Number

EP 15 30 6168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 704 017 A (HECKERMAN DAVID E [US] ET AL) 30 December 1997 (1997-12-30) | 1-3,6-8, 11-13 | INV. H04N21/25 |
| Y | * column 7, line 36 - line 55 *<br>* column 8, line 42 - column 54 *<br>* column 9, line 29 - line 49; figures 1, 3, 6, 7, 9-13 * | 4,5,9, 10,14,15 | G06N99/00 H04N21/466 |
| Y | "Cluster analysis",<br>,<br>21 May 2004 (2004-05-21), XP055240991,<br>Retrieved from the Internet:<br>URL:https://en.wikipedia.org/wiki/Cluster_analysis<br>[retrieved on 2016-01-13]<br>* the whole document * | 4,5,9, 10,14,15 | |
| A | US 2013/091088 A1 (FORMAN GEORGE [US] ET AL) 11 April 2013 (2013-04-11)<br>* paragraphs [0001], [0029] - [0031], [0045] - [0056], [0060] - [0070]; claims 1, 3,; figures 3, 4 * | 1-15 | |
| A | "Dirichlet process",<br>,<br>8 December 2006 (2006-12-08), XP055240997,<br>Retrieved from the Internet:<br>URL:https://en.wikipedia.org/wiki/Dirichlet_process<br>[retrieved on 2016-01-13]<br>* the whole document * | 1-15 | TECHNICAL FIELDS SEARCHED (IPC)<br><br>G06N<br>H04N |
| A | "Probabilistic latent semantic analysis",<br>,<br>21 June 2005 (2005-06-21), XP055240998,<br>Retrieved from the Internet:<br>URL:https://en.wikipedia.org/wiki/Probabilistic_latent_semantic_analysis<br>[retrieved on 2016-01-13]<br>* the whole document * | 1-15 | |

The present search report has been drawn up for all claims

| Place of search | Date of completion of the search | Examiner |
|---|---|---|
| Munich | 13 January 2016 | Katruff, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6168

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2016

| Patent document cited in search report | | Publication date | Patent family member(s) | Publication date |
|---|---|---|---|---|
| US 5704017 | A | 30-12-1997 | NONE | |
| US 2013091088 | A1 | 11-04-2013 | NONE | |

EPO FORM P0459

For more details about this annex : see Official Journal of the European Patent Office, No. 12/82